# EUROPÄISCHE PATENTSCHRIFT

(11) **EP 3 850 749 B1**
(45) Veröffentlichungstag und Bekanntmachung des Hinweises auf die Patenterteilung: **20.09.2023**
(21) Anmeldenummer: 19791165.4
(22) Anmeldetag: 09.09.2019
(51) Int. Cl.: H02S 20/23

(54) **SOLARDACHSYSTEM**
SOLAR ROOF SYSTEM
SYSTÈME DE TOIT SOLAIRE

(30) Priorität: 11.09.2018 DE 102018215445; 11.09.2018 DE 102018215446
(43) Veröffentlichungstag der Anmeldung: 21.07.2021
(73) Patentinhaber: Schwarze, Edelbert, 01445 Radebeul (DE)
(72) Erfinder: Schwarze, Edelbert, 01445 Radebeul (DE)
(74) Vertreter: Werner, André
(86) Internationale Anmeldenummer: PCT/DE2019/100804
(87) Internationale Veröffentlichungsnummer: WO 2020/052711

(56) Entgegenhaltungen:
- EP-A2- 1 933 389
- DE-A1-102011 118 637
- DE-U1-202009 007 525

## Beschreibung

Die Erfindung betrifft ein Solardachsystem für beispielsweise eine CarportÜberdachung.

Solardächer sind regelmäßig durch mehrere Solarpaneele gebildet und kommen in vielen Bereichen zum Einsatz. Insbesondere für den Fall, dass das jeweilige Solardach eine geschlossene Dachfläche zur insbesondere regendichten Überdachung darstellen soll, mithin unterhalb des einzelnen Solarpaneels außer einer Tragstruktur keine weitere flächig geschlossene Dach- oder Dichtstruktur vorhanden sein soll, bilden Solardächer häufig einen Teil eines Carports, eines Unterstands für Haltestellen etc. Ein solches Carport oder ein solcher Unterstand weisen somit eine Unterkonstruktion auf, auf der die Solarpaneele zur Bildung der geschlossenen Dachfläche befestigt sind. Die Solarpaneele dienen dabei häufig zur Stromerzeugung für in der Umgebung befindliche oder direkt zugeordnete elektrische Anlagen, wie zum Beispiel Parkschein- oder Fahrkartenautomaten oder - insbesondere interessant für ein Vorantreiben der Elektromobilität - Ladestationen für Elektrofahrzeuge.

DE 10 2009 043 779 A1 zeigt ein als Carport nutzbares Stahlgerüst für eine Photovoltaikanlage. Ein Carport, dessen Solarpaneel-Dach entsprechend dem Sonnenstand gekippt werden kann, ist in AT 518 613 A1 oder der DE 10 2011 118 637 A1 offenbart.

Für einen flächendeckenden Ausbau beispielsweise eines Ladestationsnetzes oder zumindest für einen wirtschaftlich attraktiven Aufbau und Versorgung einzelner Ladestationen ist dabei eine kostengünstige sowie in Anbetracht von Montagegesichtspunkten einfache und vorzugsweise auch leichtgewichtige Konstruktion zweckmäßig.

Der Erfindung liegt die Aufgabe zugrunde, ein Solardachsystem zu schaffen, das ästhetisch ansprechend, nach allen Seiten offen, vielseitig einsetzbar, insbesondere beliebig erweiterbar, ist, wobei dessen Montage mit nur geringem technischen Aufwand, insbesondere unter Einsatz einer minimalen Anzahl von Bauteilen, möglich sein soll.

Diese Aufgabe wird erfindungsgemäß gelöst durch ein Solardachsystem mit den Merkmalen des Anspruchs 1. Weitere vorteilhafte und teils für sich erfinderische Ausführungsformen und Weiterbildungen der Erfindung sind in den Unteransprüchen sowie der nachfolgenden Beschreibung dargelegt.

Das erfindungsgemäße Solardachsystem weist eine Dachfläche auf, die eine vorgegebene Anzahl von Solarpaneelen aufweist. Das Solardachsystem weist außerdem wenigstens zwei Grundträgerelemente zur Halterung der Dachfläche auf. Jedes der Grundträgerelemente weist dabei einen Hauptträger auf, der aus einem geschlossenen Hohlprofil gebildet ist, das in einem Biegebereich um einen Winkel von wenigstens 60 Grad und maximal 90 Grad gebogen ist. Außerdem weist der Hauptträger wenigstens einen an den Biegebereich anschließenden geradlinigen Trägerschenkel auf. Dieser Trägerschenkel dient dabei zur Halterung der Dachfläche. Des Weiteren weist das Solardachsystem wenigstens drei Fachwerkelemente auf, mittels derer der Trägerschenkel auf einer Biegungsaußenseite des Biegebereichs im bestimmungsgemäßen Aufstellzustand des Solardachsystems abgespannt ist. D. h., die Fachwerkelemente dienen vorzugsweise dazu, den Hauptträger und dabei insbesondere den Trägerschenkel gegen eine Verformung unter Last der Dachfläche abzustützen. Außerdem weist das Solardachsystem wenigstens zwei den Grundträgerelementen zugeordnete Fundamentadapter auf, die zur Befestigung der Grundträgerelemente an einem Fundament dienen.

Unter dem Begriff "Solardachsystem" wird hier und im Folgenden sowohl ein eigenständiges Solardach für z. B. einen einzelnen Carport, als auch eine Art Bausatz verstanden, mittels dessen eine großflächige Solardachanordnung z. B. über einer großen Parkfläche gebildet ist.

Vorzugsweise sind die wenigstens zwei Grundträgerelemente mit der Biegeebene ihrer jeweiligen Hauptträger parallel zueinander angeordnet. Die Dachfläche ist dabei auf den Trägerschenkeln der parallel zueinander angeordneten Grundträgerelementen gelagert. Hierbei ist jeder der Trägerschenkel mit einem Winkel größer 0 Grad und maximal 30 Grad zu einer Horizontalen, insbesondere zum Erdboden angeordnet. Jeder der Trägerschenkel ist dabei mittels der wenigstens drei Fachwerkelemente auf der vorstehend genannten Biegungsaußenseite des Biegebereichs abgespannt. Ein als "Bodenende" bezeichnetes, dem jeweiligen Trägerschenkel entgegengesetztes Ende des jeweiligen Hauptträgers ist dabei mittels eines der vorstehend genannten Fundamentadapter an einem Fundament befestigt.

Die Grundträgerelemente weisen mithin jeweils einen Hauptträger auf, der sich insbesondere vom Fundament bis insbesondere zu einem "First" (d. h. dem höchsten Punkt eines Dachs) erstreckt. Um also eine schräge Dachfläche nach Art eines Pultdaches aufstellen zu können, sind somit vorteilhafterweise insbesondere nur zwei Grundträgerelemente, optional auch nur zwei Fundamente erforderlich. Zusätzliche, insbesondere zusätzliche Stützen bspw. an den weiteren Ecken der Dachfläche bildende Tragstrukturen (insbesondere innerhalb der jeweiligen Biegeebene) zur Abstützung dieser Dachfläche zum Boden hin, insbesondere mittels separater Fundamente, können entfallen. Dadurch ist eine leicht durchführbare und insbesondere auch schnelle Aufstellung des Solardachsystems möglich.

Indem der Hauptträger ein vorzugsweise einstückiges Hauptelement des jeweiligen Grundträgerelements bildet, wird außerdem eine vergleichsweise hohe Stabilität ermöglicht, da aufgrund der gebogenen Konstruktion ein vergleichsweise günstiger Kraftverlauf sowie auch eine im Vergleich zu einem herkömmlichen Stabfachwerk niedrige Anzahl an stabilitätsverringernden Kerben vorliegen.

In einer bevorzugten Ausführungsform weist das Solardachsystem außerdem einen Querträger auf, der zur Kopplung von jeweils zwei parallel aufgestellten Grundträgerelementen quer zur Biegeebene des jeweiligen Hauptträgers dient. D. h., im bestimmungsgemäßen Aufstellzustand des Solardachsystems sind die zwei parallel hinsichtlich ihrer Biegeachse zueinander angeordneten Grundträgerelemente mittels dieses Querträgers quer zur Biegeebene verbunden. In einer optionalen Variante ist dieser Querträger dabei integral durch eine Montageschiene gebildet, die zur Halterung der jeweiligen Dachfläche (konkret deren Solarpaneele) die beiden parallel zueinander angeordneten Grundträgerelemente quer zum Hauptträger überspannt.

In einer bevorzugten Ausführung ist eines der Fachwerkelemente parallel zu dem Trägerschenkel des jeweiligen Hauptträgers angeordnet und bildet dabei einen (Längs-) Träger für die jeweilige Dachfläche. Vorzugsweise liegt dieses Fachwerkelement dabei auf dem Trägerschenkel auf und kragt über den Biegebereich über. In einer besonders zweckmäßigen Ausgestaltung ist dieses Fachwerkelement dabei durch ein U-förmiges Profil gebildet, das auf den Trägerschenkel aufgelegt ist und diesen insbesondere mittels seiner beiden parallelen U-Schenkel seitlich umgreift. Dies ist beispielsweise für den Fall zweckmäßig, dass der Hauptträger durch ein Hohlprofil mit kreisrohrförmigem Querschnitt gebildet ist. In diesem Fall bildet das entsprechende Fachwerkelement mit seinem bodenseitigen, die beiden parallelen U-Schenkel verbindenden Schenkel eine flache Auflage für die Montageschiene (auch als Montageprofil bezeichnet) für die einzelnen Solarpaneele bzw. die entsprechende Dachfläche. Für den bevorzugten Fall, dass dieses Fachwerkelement und der Hauptträger aus Metall gebildet sind, sind diese zweckmäßigerweise miteinander verschweißt.

In einer weiteren zweckmäßigen Ausführung weist das Solardachsystem eine Trag-und Dichtungsschiene zur Halterung und zur dichten Verbindung der Solarpaneele, insbesondere derer, deren Kanten parallel zur Biegeebene nebeneinander liegen, auf. Vorzugsweise dient diese Trag- und Dichtungsschiene auch zur Führung von Verbindungskabeln der einzelnen Solarpaneele. Vorzugsweise sind die einzelnen Solarpaneele mittels dieser Trag- und Dichtungsschiene an den vorstehend beschriebenen Montageschienen, die zwischen jeweils zwei Grundträgerelementen verlaufen, befestigt. Zur dichten Verbindung der Solarpaneele, insbesondere zur Abdichtung der (vorzugsweise parallel zur Biegeebene verlaufenden) Kanten der Solarpaneele ist ein Dichtungsprofil der Trag- und Dichtungsschiene als entlang seiner Längsrichtung um die jeweilige Kante klappbares Profil, vorzugsweise aus einem Elastomer gebildet. Vorzugsweise weist dieses Dichtungsprofil dabei zwei Dichtungsschenkel auf, die sich quer zur Längsrichtung des Dichtungsprofils erstrecken und über einen Scharnierabschnitt miteinander einstückig verbunden sind. Zur Montage wird das Dichtungsprofil um die jeweilige Kante der Solarpaneele gelegt, sodass je ein Dichtungsschenkel ober- und unterseitig auf dem jeweiligen Solarpaneel aufliegt. Anschließend werden die Solarpaneele in einen C-Profil-artigen Abschnitt der Trag- und Dichtungsschiene eingeschoben. Dieser C-Profil-artige Abschnitt bildet dabei eine Aufnahmenut für das Dichtungsprofil mit dem darin aufgenommenen Solarpaneel.

In einer bevorzugten Ausführung ist der Scharnierabschnitt zwischen den beiden Dichtungsschenkeln nach Art eines Filmscharniers ausgebildet. D. h. die Scharnierwirkung erfolgt durch eine rein elastische Verformung des Materials des Elastomerdichtungsprofils im Bereich dieses Scharnierabschnitts.

Unter "einstückig verbunden" wird hier und im Folgenden insbesondere verstanden, dass die Dichtungsschenkel und der Scharnierabschnitt monolithisch, d. h. aus ein-und demselben Material und vorzugsweise auch in einem einzigen, gemeinsamen Fertigungsschritt ausgebildet sind. Beispielsweise wird das Elastomerdichtungsprofil dabei aus einem Elastomer, insbesondere einem geeigneten Gummi, Ethylen-Propylen-Dien-Kautschuk (EPDM), einem thermoplastischen Elastomer (TPE) oder dergleichen extrudiert.

Dadurch, dass die Dichtungsschenkel im bestimmungsgemäßen Montagezustand die Kante des Solarpaneels ober- und unterseitig umgreifen und auch die Stirnfläche der Kante mithin von dem Scharnierabschnitt abgedeckt ist, wird erkanntermaßen eine vergleichsweise große Dichtfläche ermöglicht. Außerdem wird dadurch, dass die Dichtungsschenkel im Vormontagezustand nicht parallel zueinander ausgerichtet sind, sondern zumindest V-artig auseinander stehen, erreicht, dass die Montage des Elastomerdichtungsprofils an dem Solarpaneel vergleichsweise unkompliziert erfolgen kann. Insbesondere für den Fall, dass mehrere Solarpaneele mittels ein- und demselben Dichtungsprofil abgedichtet werden sollen, können diese somit nebeneinander und mit ihrer abzudichtenden Kante fluchtend zueinander auf einen der beiden Dichtungsschenkel aufgelegt und anschließend der zweite Dichtungsschenkel um die Kante aller Solarpaneele herum geklappt werden.

Vorzugsweise ist außerdem an wenigstens einem der beiden Dichtungsschenkel an einer Auflageseite zum Solarpaneel hin eine Labyrinthdichtung mit wenigstens einer Mulde (d. h. Labyrinthkammer) ausgebildet. Das heißt, dass dieser Dichtungsschenkel nicht vollflächig über seine gesamte Schenkellänge auf dem Solarpaneel aufliegt, sondern in einer senkrecht zur Längsrichtung des Elastomerdichtungsprofils stehenden Dichtrichtung an mindestens zwei Punkten mit dem Solarpaneel in Kontakt steht und zwischen diesen Punkten die Labyrinthkammer angeordnet ist. Bevorzugt handelt es sich bei dem die Labyrinthdichtung aufweisenden Dichtungsschenkel um den Dichtungsschenkel, der im bestimmungsgemäßen Einsatzzustand des Dichtungssystems der Witterung ausgesetzt und somit insbesondere auf der Paneeloberseite der Solarpaneele angeordnet ist.

In einer bevorzugten Ausführung weist das Elastomerdichtungsprofil an einem der beiden Dichtungsschenkel, konkret an dem, der im bestimmungsgemäßen Montagezustand auf einer Paneeleoberseite des Solarpaneels (und somit auf der im bestimmungsgemäßen Einsatzzustand der Sonne zugewandten Seite) angeordnet ist, einen Schutzkörper auf. Dieser Schutzkörper ist dabei aus einem von dem die Dichtungsschenkel bildenden Elastomer abweichenden Kunststoff ausgebildet. Vorzugsweise erstreckt sich dieser Schutzkörper dabei über die gesamte Länge oder Fläche des Elastomerdichtungsprofils, die im bestimmungsgemäßen Einsatzzustand des Dichtungssystems Sonnenlicht und auch anderen Witterungseinflüssen ausgesetzt ist.

In einer bevorzugten Ausführung ist der Kunststoff des Schutzkörpers aus einem UVstabil modifizierten Kunststoff gebildet. Vorzugsweise ist der Kunststoff des Schutzkörpers dabei mittels eines Coextrusions-Verfahrens an den entsprechenden Dichtungsschenkel angeformt. Dadurch kann die Lebensdauer des Elastomerdichtungsprofils bei Bestrahlung mit Sonnenlicht vorteilhafterweise erhöht werden.

In einer alternativen oder optional zusätzlichen Ausführung weist der Kunststoff des Schutzkörpers eine gegenüber dem Elastomer der Dichtungsschenkel erhöhte Abriebsfestigkeit auf. Dies ist beispielsweise für Regionen vorteilhaft, in denen mit dem Wind auch Sand transportiert wird, der wiederum üblicherweise eine abrasive Wirkung zeigt. Zudem kann auch eine bei Solardächern zweckmäßige Reinigung der Paneeloberseite dem Elastomer des Elastomerdichtungsprofils weniger anhaben.

In einer weiteren zweckmäßigen Ausführung ist die Labyrinthdichtung insbesondere durch zwei im Vormontagezustand - d. h. ohne eingelegtes Solarpaneel - schräg von der Auflageseite des entsprechenden Dichtungsschenkels vorstehende Dichtungslippen und unter diesen in die Auflageseite eingeformten Mulden gebildet. Jede der Mulden bildet dabei jeweils eine Labyrinthkammer. Die Dichtungslippen und die Mulden sind dabei derart bemessen, dass im bestimmungsgemäßen Montagezustand des Dichtungssystems die Dichtungslippen fluchtend zueinander und flach - d. h. insbesondere flächig - auf dem Solarpaneel aufliegen. Die korrespondierende Mulde wird dabei stegartig von der entsprechend zugeordneten Dichtungslippe zu einem Großteil überspannt. Bei den Mulden bzw. den durch diese gebildeten Labyrinthkammern handelt es sich vorzugsweise um quer zur Dichtungsrichtung verlaufende (d. h. in Längsrichtung des Elastomerdichtungsprofils) verlaufende Rinnen, die einerseits durch einen Fuß der beiden Dichtungslippen und andererseits vorzugsweise durch eine randseitige Lippe und/oder den Schutzkörper bzw. einen innenseitig zu dem jeweiligen Dichtungsschenkel liegenden Vorsprung, der sich am Übergang zu dem Scharnierabschnitt befindet, begrenzt. Dadurch, dass die Dichtungslippen im Vormontagezustand schräg von der Auflageseite des Dichtungsschenkels vorstehen, üben diese im um das Solarpaneel geklappten Zustand des Elastomerdichtungsprofils eine auf die Oberfläche des Solarpaneele wirkende Dichtkraft (mithin eine elastische Rückstellkraft) aus. Dadurch, dass die Dichtungslippen die jeweils zugeordnete Mulde (die entsprechende Labyrinthkammer) zu einem Großteil überspannen, bildet die jeweilige Mulde vorzugsweise eine Art Ablaufrinne, die bei Eintritt von beispielsweise Regenwasser in die entsprechende Mulde in dieser mit nur geringfügigem Kontakt zum Solarpaneel in dieser Rinne verbleiben oder abgeleitet werden kann. Durch zwei aufeinanderfolgenden Mulden bzw. Labyrinthkammern wird erkanntermaßen die Dichtwirkung vorteilhaft erhöht.

In einer weiteren zweckmäßigen Ausführung weist der andere Dichtungsschenkel (d. h. der, der im bestimmungsgemäßen Montagezustand der Labyrinthdichtung gegenüberliegt) eine mit einer Vielzahl von in Längsrichtung des Elastomerdichtungsprofils verlaufenden Rillen versehene Dichtfläche auf. Dadurch wird eine im bestimmungsgemäßen Montagezustand auf diesen Dichtungsschenkel in Richtung des Solarpaneels wirkende Andrückkraft auf eine Vielzahl kleiner Kontaktstellen verteilt, sodass diese mit einem entsprechend erhöhten Dichtungsdruck an der Oberfläche, insbesondere der unterseitigen Oberfläche, des Solarpaneels anliegen.

In einer besonders bevorzugten Ausführung weist das Dichtungssystem auch eine vorzugsweise aus einem Metall gebildete Montageschiene zur Aufnahme einer mit dem Elastomerdichtungsprofil umgebenen Kante des Solarpaneels auf. Diese Montageschiene weist dabei ein C-Profil auf, das einen Aufnahmeschlitz (auch: "Aufnahmenut") für das Elastomerdichtungsprofil und das Solarpaneel bildet. Außerdem weist die Montageschiene eine im bestimmungsgemäßen Montagezustand auf einer der Paneeloberseite abgewandten Unterseite des C-Profils angeordnete Tragschiene auf. Mittels dieser Tragschiene ist die Montageschiene auf einer Unterkonstruktion, die zur Aufstellung der Solarpaneele beispielsweise in Form eines Solardachs dient, befestigbar oder im bestimmungsgemäßen Einsatzzustand befestigt. Das Dichtungssystem dient in diesem Fall somit nicht nur zur Abdichtung der Kante des Solarpaneels sondern auch insbesondere in Form eines kombinierten Trag- und Dichtungssystems zur Halterung des Solarpaneels oder gegebenenfalls mehrerer Solarpaneele.

Vorzugsweise ist das C Profil dabei derart gestaltet, dass das Elastomerdichtungsprofil im in das C-Profil eingeschobenen Zustand gegen das Solarpaneel geklemmt ist. Mithin weist der von dem C-Profil gebildete Aufnahmeschlitz eine zumindest geringfügige Presspassung für das um das Solarpaneel gelegte (insbesondere geklappte) Elastomerdichtungsprofil auf. Aufgrund der vorstehend beschriebenen Gestaltung des Elastomerdichtungsprofils, insbesondere der beiden Dichtungsschenkel ist es in diesem Fall auch möglich, dass insbesondere bei einem an zwei gegenüberliegenden Kanten eingesetzten Dichtungssystem (inklusive der Montageschiene) eine über die vorstehend beschriebene Klemmung hinausgehende Fixierung des Solarpaneels entfallen kann.

In einer weiteren zweckmäßigen Ausführung weist die Montageschiene eine Tropf-und Führungswanne auf, die in Längsrichtung (des Elastomerdichtungsprofils) verläuft und zur Ableitung von zwischen dem Elastomerdichtungsprofil und dem Solarpaneel durchgetretenem Tropfwasser sowie zur verdeckten Führung von Anschlusskabeln des Solarpaneels dient. Mithin werden im bestimmungsgemäßen Montagezustand des Solarpaneels an der Montageschiene die, üblicherweise in einem Eckbereich des jeweiligen Solarpaneels angeordneten Anschlusskabel möglichst direkt (d. h. insbesondere geradlinig) in diese Tropf- und Führungswanne geführt und dort beispielsweise mit einem Sammelkabel, das insbesondere zu einem Transformator und/oder einem Wechselrichter führt, verknüpft. Da derartige Kabel ohnehin elektrisch isoliert sind, kann eine von gegebenenfalls hindurchtretendem Tropfwasser gesonderte Führung dieser Kabel unterbleiben.

In einer weiteren zweckmäßigen Ausführung, die vorzugsweise zur Bildung einer Dachfläche aus mehreren nebeneinander angeordneten Solarpaneelen dient, weist die Montageschiene insbesondere ein Doppel-C-Profil auf, dass mithin zwei entgegengesetzt ausgerichtete Aufnahmeschlitze zur insbesondere beidseitigen Aufnahme von mit Elastomerdichtungsprofilen umgebenen Kanten von Solarpaneelen auf.

In einer weiteren zweckmäßigen Ausführung ist jedes Grundträgerelement, zumindest jeder Hauptträger, vorzugsweise aber auch die Fachwerkelemente aus Aluminium, vorzugsweise aus jeweils einem Aluminium-Profil gebildet. Insbesondere weist jedes Grundträgerelement dabei ein Gesamtgewicht von etwa 40 bis 70 Kilogramm, insbesondere von etwa 50 bis 65 Kilogramm auf. Dadurch wird vorteilhafterweise ein Aufbau einer großflächigen Solardachanordnung mittels des Solardachsystems beispielsweise durch lediglich zwei Personen ermöglicht.

In einer bevorzugten Ausführung weisen die Trägerelemente eines jeden Grundträgerelements, mithin wenigstens der Hauptträger, sowie insbesondere auch die Fachwerkelemente eine Wandstärke von etwa 0,5 Millimetern auf.

In einer weiteren bevorzugten Ausführung weist der Hauptträger in seinem Biegebereich einen Biegeradius von wenigstens 2 Meter, insbesondere von etwa 2,4 Meter auf. Durch diesen vergleichsweise großen Biegeradius wird vorteilhafter-weise eine gleichmäßige Krafteinleitung von dem Trägerschenkel über den Biegebereich in das Bodenende, insbesondere in einen im Bereich des Bodenendes an den Biegebereich anschließenden zweiten, geradlinigen Trägerschenkel des Hauptträgers ermöglicht.

Jedes Grundträgerelement weist - insbesondere entlang der Biegeebene gesehen - vorzugsweise eine Spannweite von mindestens etwa 5 Meter auf. Diese Spannweite wird dabei vorzugsweise über die im bestimmungsgemäßen Aufstellzustand des jeweiligen Grundträgerelements auf die Horizontale projizierte Länge bemessen und erstreckt sich somit von einem "firstseitigen" (d. h. im bestimmungsgemäßen Aufstellzustand höchstliegenden) Ende des Trägerschenkels bis zum Bodenende des Hauptträgers. Die Spannweite der von den mindestens zwei parallel zueinander angeordneten Grundträgerelementen getragenen Dachfläche, die vorzugsweise im Wesentlichen (d. h. exakt oder näherungsweise) der des jeweiligen Grundträgerelements entspricht, eignet sich somit besonders gut, um einen Carport zur Überdachung eines Stellplatzes für einen handelsüblichen Personenkraftwagen zu bilden. Optional weist jedes Grundträgerelement eine Spannweite von etwa 6 Meter auf.

Vorzugsweise ist das Solardachsystem, insbesondere das Grundträgerelement mittels einer Finite-Elemente-Methode hinsichtlich seiner erforderlichen Festigkeit und Stabilität für die hier und im Folgenden beschriebenen Abmessungen berechnet.

Insbesondere um die Nutzung des Solardachsystems als Carport zu unterstützen, weist jedes Grundträgerelement des Solardachsystems vorzugsweise eine Firsthöhe von wenigstens 3, insbesondere von etwa 3,5 Meter, vorzugweise von etwa 4,2 Meter, und eine Traufhöhe von wenigstens 2,5, insbesondere von mindestens etwa 2,7 Metern auf. Die jeweiligen Grundträgerelemente sind dabei vorzugsweise derart berechnet, dass sich auf einfache Weise durch entsprechende Verlängerung des Hauptträgers insbesondere im Bereich des Bodenendes, vorzugsweise eines dort angeordneten, insbesondere geradlinigen zweiten Trägerschenkels, die Traufhöhe auf bis zu etwa 4,6 Meter und die Firsthöhe auf etwa 5 oder 6 Meter, zumindest auf 4,8 Meter erhöhen lassen. Eine Firsthöhe von mehr als 5 Meter eignet sich dabei insbesondere auch zur Nutzung des Solardachsystems als Halle.

Vorzugsweise ist das Solardachsystem mindestens dafür ausgelegt und vorgesehen, in geographischen Bereichen, denen die Windlastzone (auch: "Windzone") 2 und vorzugsweise auch die Schneelastzone 2 zugewiesen ist, aufgestellt zu werden. Optional ist das Solardachsystem dafür ausgelegt, in der Windlastzone 3 und/oder der Schneelastzone 3 aufgestellt zu werden.

In einer besonders bevorzugten Ausführung umfasst das Solardachsystem wenigstens zwei Erdschrauben, die zur Bildung des jeweiligen Fundaments für die wenigstens zwei Grundträgerelemente dienen. Jede der beiden Erdschrauben weist dabei vorzugsweise eine Länge von etwa 2 Meter auf. Dadurch lässt sich das jeweilige Fundament vergleichsweise einfach und in kurzer Zeit ausbilden. Insbesondere sind ein Ausheben einer Fundamentgrube, ein Verfüllen dieser mit Beton und insbesondere ein vergleichsweise zeitaufwendiges Aushärten des Betons in diesem Fall nicht erforderlich. Optional kann auch eine Vorbereitung der Aufstellfläche, z. B. ein Einebnen, ein Verdichten oder dergleichen entfallen. Für den Fall, dass auf einer bereits bspw. gepflasterten, geteerten oder betonierten Aufstellfläche das Solardachsystem aufgestellt werden soll, genügt optional eine Öffnung des Untergrunds (also bspw. der Teer-, Pflaster- oder Betonschicht) mit einem Durchmesser geringfügig größer als der Durchmesser der Erdschraube. Eine Erdschraube kann vorteilhafterweise auch bei dieser Länge mit einem entsprechenden Montagegerät in etwa 10 Minuten eingedreht werden und weist dabei vorzugsweise unmittelbar seine bestimmungsgemäße Standfestigkeit auf. Das Solardachsystem umfasst mithin vorzugsweise als Fundament wenigstens diese beiden Erdschrauben.

In einer weiteren bevorzugten Ausführung weist der Fundamentadapter eine Grundplatte zur Befestigung an dem Fundament, vorzugsweise an der jeweiligen Erdschraube, und ein mit dieser Grundplatte verbundenes Standrohr auf. Vorzugsweise wird die Grundplatte mit dem Fundament, konkret der Erdschraube (insbesondere mittels sechs Schrauben) verschraubt. Auf das Standrohr wird bei der Montage des Solardachsystems das Bodenende des jeweiligen Hauptträgers aufgesteckt und fixiert. Mithin ist bei dem Solardachsystem das Bodenende des jeweiligen Hauptträgers auf das Standrohr aufgesteckt (oder aufgeschoben) und vorzugsweise mittels wenigstens zweier Schrauben an dem jeweiligen Standrohr fixiert.

In einer zweckmäßigen Variante des Solardachsystems weist dieses eine Montagemanschette auf, die insbesondere zur Ausrichtung (insbesondere Nivellierung) der Bodenenden der jeweiligen Hauptträger gegenüber dem Fundamentadapter und den anderen Hauptträgern dient. Diese Montagemanschette ist dabei vorzugsweise durch zwei Halbschalen gebildet, die um die Bodenenden des jeweiligen Hauptträgers herum gelegt und insbesondere mittels Klemmung an diesem befestigt werden. Zuvor oder optional an-schließend wird das Bodenende des jeweiligen Hauptträgers in seiner Höhe zu den Bodenenden der anderen Hauptträger (bspw. mittels zwischen das Bodenende und die Grundplatte geschobenen Distanzstücken) ausgerichtet, sodass die Bodenenden vorzugsweise alle in einer gemeinsamen Horizontalebene angeordnet sind. Anschließend wird durch zwei eine Bohrschablone bildende Löcher der jeweiligen Montagemanschette hindurch das jeweilige Bodenende des Hauptträgers mit dem Standrohr des Fundamentadapters verschraubt.

In einer Ausführung weist das Solardachsystem wenigstens vier Grundträgerelemente auf sowie eine zweite Dachfläche. Jeweils zwei der Grundträgerelemente sind dabei mit ihren Trägerschenkeln voneinander weg weisend und mittels wenigstens zwei der jeweils wenigstens drei Fachwerkelemente aneinandergekoppelt. D. h., diese Grundträgerelemente sind dabei rückseitig, insbesondere im Bereich des Biegebereichs des Hauptträgers mittels wenigstens zwei der drei Fachwerkelemente miteinander verbunden. Jeweils zwei diese vier Grundträgerelemente, insbesondere die zwei parallel und mit ihren Trägerschenkeln in die gleiche Richtung weisenden Grundträgerelemente tragen dabei jeweils eine der zwei Dachflächen. Die beiden rückseitig aneinander angeordneten und miteinander verbundenen Grundträgerelemente sind somit gegenseitig abgespannt. Die beiden Dachflächen treffen sich dabei außerdem an ihrer jeweiligen Traufe, sodass sich ein Schmetterlingsdach oder "Y-Dach" ergibt. Diese Anordnung findet bevorzugt für einen Carport Einsatz, wobei unter jeder Dachfläche jeweils ein Parkplatz für ein Fahrzeug, vorzugsweise mit gegenläufiger Einparkrichtung, angeordnet ist. Hier kann der für zwei Grundträgerelemente vorgesehene Querträger auch von den anderen, rückseitig an diese angeschlossenen Grundträgerelementen "mitgenutzt" werden.

Insbesondere bei der Ausführung als Schmetterlingsdach sind außerdem vorzugsweise die zwei rückseitig aneinander angeordneten Grundträgerelemente mit genau sieben Schrauben aneinander und insbesondere an dem Fundament, konkret dem Fundamentadapter befestigt. Insbesondere ist dabei jeder Hauptträger mit jeweils zwei Schrauben an dem jeweiligen Fundamentadapter befestigt. Mittels der weiteren drei Schrauben sind insbesondere die Fachwerkelemente untereinander und/oder an dem Hauptträger befestigt. Insbesondere sind die parallel zum Trägerschenkel verlaufenden Fachwerkelemente beider Grundträgerelemente mittels einer Schraube miteinander im Bereich der Traufe verbunden. Vorzugsweise ist mittels dieser Schraube auch eine Regenrinne zwischen die beiden Grundträgerelemente eingebunden. Durch den Einsatz von nur sieben Schrauben ergibt sich eine besonders leicht durchführbare und insbesondere auch wenig Montagezeit in Anspruch nehmende Aufstellung des Solardachsystems.

In einer alternativen Ausführung weist das Solardachsystem vier Grundträgerelemente sowie ebenfalls die zweite Dachfläche auf, wobei jedoch jeweils zwei Grundträgerelemente firstseitig, d. h. mit dem jeweiligen Trägerschenkel freiendseitig zueinander weisend, gegeneinander abgestützt sind. Auch in diesem Fall tragen die jeweils in die gleiche Richtung weisenden Grundträgerelemente jeweils eine der Dachflächen. Dieser Aufbau ergibt somit insbesondere ein sogenanntes Satteldach. Außerdem findet dieser Aufbau vorzugsweise für eine Halle, beispielsweise eine Lagerhalle, ein Gewächshaus oder dergleichen Einsatz.

In einer optionalen Ausführung sind das vorstehend beschriebene Schmetterlingsdach sowie das Satteldach miteinander kombiniert, sodass sich beispielsweise eine Halle mit Satteldach mit einem daran anschließenden Carport mit Pultdach ergibt.

In einer weiteren Ausführung, die für alle Dachvarianten (insbesondere zumindest für Schmetterlingsdach und Satteldach) Anwendung finden kann, weist das Solardachsystem insbesondere mindestens sechs Grundträgerelemente auf, wobei jeweils drei Grundträgerelemente parallel zueinander und mit ihren Trägerschenkeln in die gleiche Richtung weisend angeordnet sind. Im Fall des Schmetterlingsdachs ergeben sich somit insgesamt vier Carport-Parkplätze, nämlich jeweils einem zwischen zwei in die gleiche Richtung ausgerichteten Grundträgerelementen.

In einer optionalen Ausführung umfasst das Solardachsystem einen (oder mehrere) Adapter zur Spannweitenvergrößerung insbesondere bei einem Satteldach. Dieser Adapter überbrückt im aufgestellten Zustand vorzugsweise einen Abstand zwischen den Firstenden der zwei gegenüberliegenden Grundträgerelemente. Dadurch kann die (Gesamt-)Spannweite der von dem Solardachsystem gebildeten Solardachanordnung von insgesamt 10 bspw. auf 13 bis etwa 17 Meter vergrößert werden.

In der Ausführung des Schmetterlingsdachs sind vorzugsweise die drei Fachwerkelemente eines Grundträgerelements mit den korrespondierenden drei Fachwerkelementen des rückseitig angeschlossenen Grundträgerelements gekoppelt.

In der Ausführung als Satteldach sind die drei Fachwerkelemente vorzugsweise in gleicher Art ausgerichtet wie bei der Anordnung für das Schmetterlingsdach, jedoch mittels eines vierten Fachwerkelements, das vorzugsweise vertikal angeordnet ist, in Richtung Boden abgespannt. Vorzugsweise ist dieses vierte Fachwerkelement im Bereich des Bodenendes mit dem Hauptträger und/oder mit dem Fundamentadapter gekoppelt und somit (mittelbar oder unmittelbar) mit dem Boden verbunden. Optional ist das vierte Fachwerkelement mittels eines weiteren, separat zugeordneten Fundamentadapters im Boden verankert. Dieses vierte Fachwerkelement stellt dabei also insbesondere eine Art "Zuganker" dar. Vorzugsweise ist in der Ausführung des Solardachsystems mit Satteldach das vierte Fachwerkelement als U-Profil ausgebildet und dient insbesondere auch als Montageprofil für weitere Anbauteile. Durch die Ausführung als U-Profil kann das vierte Fachwerkelement auch einfach an den Hauptträger angebunden werden, insbesondere indem dieses den Hauptträger teilweise umgreift.

Für den Fall, dass das Solardachsystem ein Pultdach aufweist, ist in einer besonders stabilen Ausführung ebenfalls das vorstehend beschriebene vierte Fachwerkelement, ausgebildet als Hohlprofil (insbesondere als Rundrohr, vorzugsweise das gleiche Hohlprofil wie das des Hauptträgers), vorgesehen. Insbesondere ist das vierte Fachwerkelement dabei mittels eines separat zugeordneten Fundamentadapters mit dem Erdboden verbunden. Optional wird hierbei das gleiche Fundament wie für das zugeordnete Grundträgerelement genutzt - in diesem Fall bspw. ein Betonfundament oder eine entsprechend vergrößerte Erdschraube. Alternativ ist der dem vierten Fachwerkelement separat zugeordnete Fundamentadapter durch eine separate Erdschraube im Erdboden verankert. In einer optionalen Variante sind der Hauptträger und das vierte Fachwerkelement gemeinsam mittels eines angepassten Fundamentadapters im Erdboden verankert, wobei dieser Fundamentadapter zwei Standrohre aufweist, von denen eines zur Aufnahme des Hauptträgers und das andere zur Aufnahme des vierten Fachwerkelements eingerichtet sind.

In einer optionalen Ausstattungsvariante weist das Solardachsystem einen Wechselrichter und/oder einen Transformator für den von den Solarpaneelen erzeugten Strom auf, sodass das Solardachsystem insbesondere eine Photovoltaikanlage bildet. Alternativ oder vorzugsweise zusätzlich weist das Solardachsystem auch eine Ladestation für ein Elektrofahrzeug auf. Diese Ladestation ist dabei optional mit dem Wechselrichter bzw. Transformator gekoppelt. Vorzugs-weise ist der Wechselrichter, der Transformator und/die Ladestation dabei der Höhe von etwa 1,7 Meter angeordnet. Weiter optional weist das Solardachsystem auch eine Wärmepumpe oder einen Ankopplungspunkt zu einer solchen auf.

In einer weiteren optionalen Ausstattungsvariante weist das Solardachsystem Seitenwände auf, die insbesondere parallel zur Biegeebene des jeweiligen Hauptträgers der das Solardachsystem außenseitig begrenzenden Grundträgerelemente angeordnet sind. Die Seitenwände sind dabei bspw. aus einem Profil- und/oder Lochblech oder einem zumindest teil-transparenten Material, bspw. einem Glas oder einen Kunststoff, bspw. PMMA oder PC gebildet. Optional weist das Solardachsystem (zusätzlich oder alternativ zu den Seitenwänden) auch ein Fronttor auf, das quer zur Biegeebene verlaufend angeordnet ist und somit vorzugsweise in Kombination mit den Seitenwänden und den Dachflächen einen geschlossenen Innenraum bildet. Das Fronttor ist dabei optional als Roll-, Hebe- oder Flügeltor ausgebildet. Weiter optional weist das Solardachsystem auch Zwischenwände, insbesondere vergleichbar zu den Seitenwänden ausgeführt, zur Unterteilung der überdachte Fläche auf. Beispielsweise dienen in dieser Ausstattungsvariante die vorstehend beschriebenen vierten Fachwerkelemente zur Befestigung der Seitenwände und/oder der Fronttore.

Vorzugsweise handelt es sich bei den eingesetzten Solarpaneelen um zumindest teilweise transparente Photovoltaikmodule.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher dargestellt. Darin zeigen maßstabsgetreu:
- Fig. 1: eine schematische Perspektivansicht einer Ausgestaltung des Solardachsystems in Form eines Carports,
- Fig. 2, 3: in einer schematischen Seitenansicht das Solardachsystem, in einem teilaufgestellten Zustand, insbesondere ohne Dachflächen, jeweils in einer unterschiedlichen Anordnung,
- Fig. 4: in einer schematischen Seitenansicht einen Fundamentadapter des Solardachsystems,
- Fig. 5: in einer schematischen Schnittansicht eine Dichtung zu Abdichtung von Solarpaneelen des Solardachsystems untereinander,
- Fig. 6: in einer schematischen Schnittansicht eine Trag- und Dichtungsschiene zur Abdichtung und Halterung der Solarpaneele, und
- Fig. 7: in einer schematischen Querschnittansicht ein Elastomerdichtungsprofil eines Dichtungssystems des Solardachsystems.

Einander entsprechende Teile sind in allen Figuren stets mit gleichen Bezugszeichen versehen.

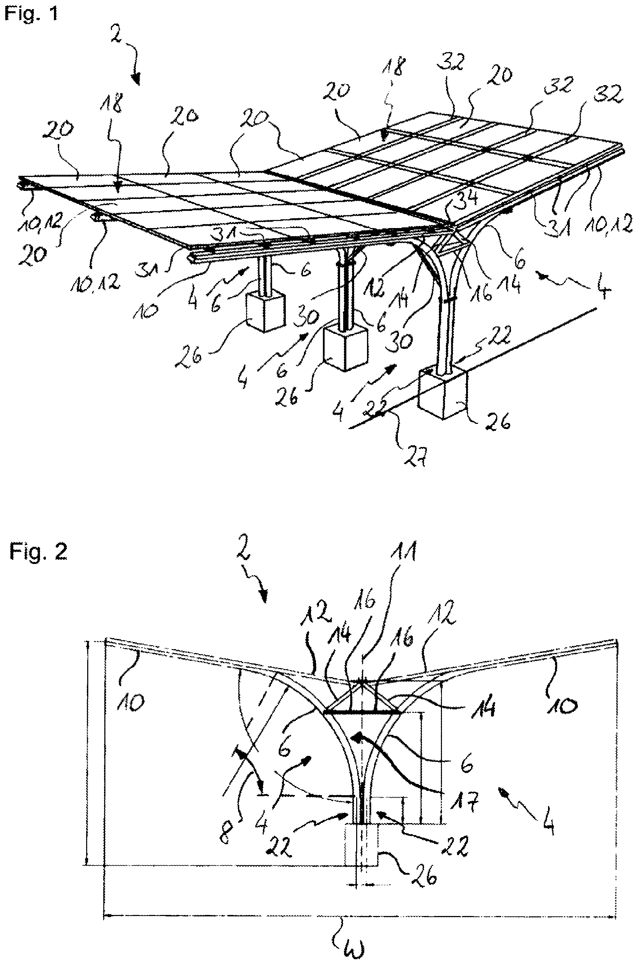

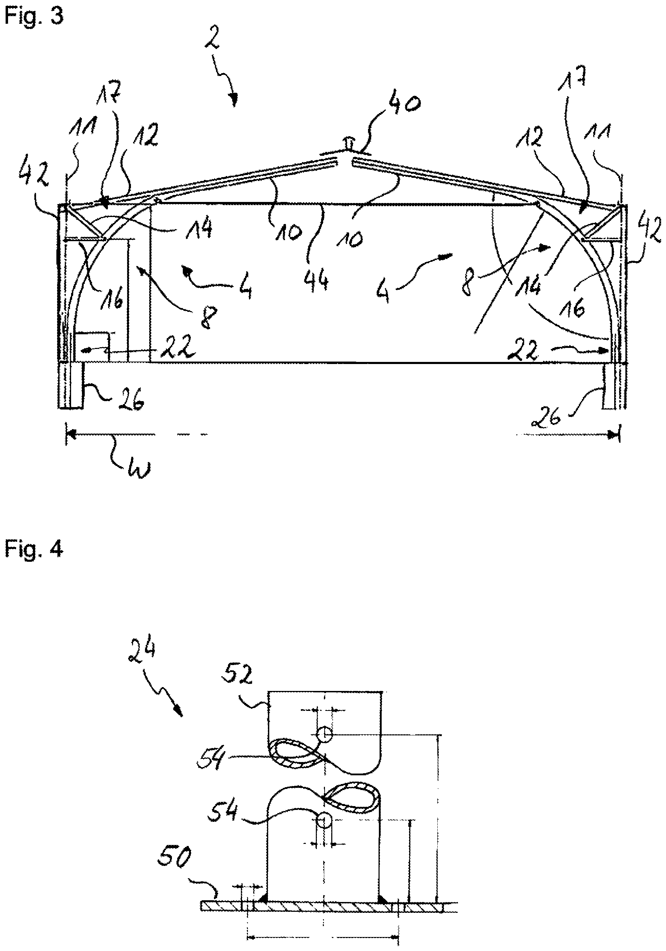

In Fig. 1 ist schematisch das Solardachsystem 2 dargestellt, das einen Carport bildet. Das Solardachsystem 2 ist dabei als einem nachfolgend näher beschriebenen Bausatz montiert. Das Solardachsystem 2 umfasst im dargestellten Ausführungsbeispiel sechs Grundträgerelemente 4. Diese weisen wiederum einen Hauptträger 6 auf, der aus einem Aluminium-Rundrohr, d. h. einem geschlossenen Hohlprofil gebildet ist. Der Hauptträger 6 ist dabei in einem Biegebereich 8 (s. Fig. 2) um einen Winkel von 100 Grad gebogen. Ein an den Biegebereich 8 anschließender Trägerschenkel 10 des Hauptträgers 6 ist mithin im dargestellten Aufstellungszustand um 80 Grad von einer Vertikalen 11 ausgelenkt. Die Grundträgerelemente 4 weisen außerdem drei Fachwerkelemente 12,14 und 16 auf, die auf einer Biegungsaußenseite 17 des Biegebereichs 8 zur Abspannung konkret des Trägerschenkels 10 dienen. Das Fachwerkelement 12 verläuft dabei über die gesamte Länge des Trägerschenkels 10 parallel zu diesem und kragt konkret auf der Biegungsaußenseite 17 über den Biegebereich 8 über. Das Fachwerkelement 12 bildet dabei einen Träger für eine Dachfläche 18 des Solardachsystems 1. Die Dachfläche 18 umfasst dabei im dargestellten Ausführungsbeispiel fünfzehn Solarpaneele 20. Die jeweiligen Grundträgerelemente 4 sind dabei jeweils mit einem Bodenende 22 des jeweiligen Hauptträgers 6 auf einen Fundamentadapter 24 (näher dargestellt in Fig. 4) aufgesetzt und mit diesem verbunden. Der Fundamentadapter 24 ist wiederum mit einem Fundament 26 verbunden. Im in den Figuren 1-3 dargestellten Ausführungsbeispiel ist das Fundament 26 durch ein herkömmliches Betonfundament gebildet.

In einem nicht näher dargestellten Ausführungsbeispiel ist das Fundament 26 durch eine in den Erdboden, dessen Oberfläche durch eine beispielhaft für das BodenNiveau stehende Niveaulinie 27 angedeutet ist, eingeschraubte Erdschraube gebildet.

Im in Fig. 1 dargestellten Ausführungsbeispiel weist das Solardachsystem 2 konkret zwei Dachflächen 18 auf, die jeweils von drei Grundträgerelementen 4 getragen sind. Die beiden (ersten und zweiten) Dachflächen 18 bilden dabei ein Schmetterlingsdach. D. h., die beiden Dachflächen 18 treffen an der sogenannten Traufe aufeinander. Somit sind jeweils drei Grundträgerelemente 4 mit ihren Trägerschenkeln 10 in die gleiche Richtung und von den Trägerschenkeln 10 der anderen drei Grundträgerelemente 4 weg weisend angeordnet. Der First der beiden Dachflächen 18 liegt mithin auf einer Außen- oder Vorderseite der Grundträgerelemente 4 und somit des Solardachsystems 1. Auf der Biegungsaußenseite 17 der Hauptträger 6 der jeweiligen Grundträgerelemente 4 sind die Fachwerkelemente 12, 14 und 16 der jeweils (rückseitig) aneinander angeordneten Grundträgerelemente 4 miteinander gekoppelt. Dadurch ist insbesondere der jeweilige Trägerschenkel 10 dieser beiden Grundträgerelemente 4 gegen das jeweilige andere Grundträgerelement 4 abgespannt. Die Fachwerkelemente 12, 14 und 16 dieser beiden Grundträgerelemente 4 bilden dabei gemeinsam mehrere "Kraftdreiecke". In Fig. 2 ist das Solardachsystem 2 ohne die beiden Dachflächen 18 dargestellt.

Zur weiteren Stabilisierung des Solardachsystems 2 sind die jeweils quer zur Biegeebene des jeweiligen Hauptträgers 6 benachbarten Grundträgerelemente 4 mittels zweier Querträger 30 untereinander verspannt.

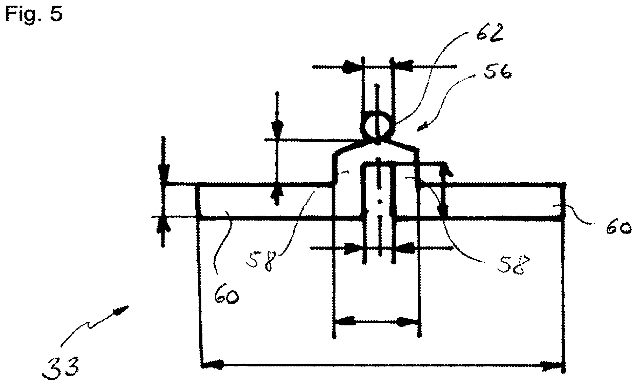

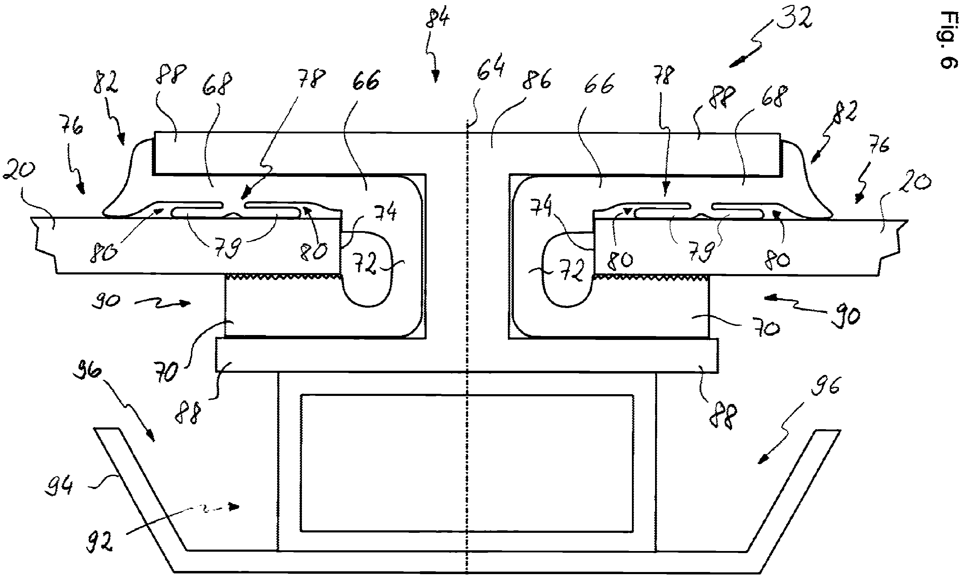

Zur Halterung der jeweiligen Dachfläche 18 weist das Solardachsystem 2 mehrere auf den Fachwerkelementen 12 befestigte und quer zu diesen verlaufende Montageschienen 31 (auch als "Montageprofil" oder "Trägerschiene" bezeichnet) auf. Die einzelnen Solarpaneele 20 sind dabei in Richtung der Fachwerkelemente 12 mittels der in Fig. 6 dargestellten Trag- und Dichtungsschienen 32 untereinander gehaltert und auf den Montageschienen 31 befestigt. Quer zur Richtung der Fachwerkelemente 12 sind die einzelnen Solarpaneele 20 unter Zwischenlagerung einer in Fig. 5 näher dargestellten Gummidichtung 33 gegeneinander abgedichtet.

Um insbesondere im Bereich der Traufe ein Herabtropfen von Regenwasser zu verhindern, weist das Solardachsystem 2 eine Regenrinne 34 auf, die unterhalb der beiden Dachflächen 18 von den Fachwerkelementen 12 und 14 quer zur Richtung der Fachwerkelemente 12 verlaufend getragen wird.

In Fig. 3 ist ein alternatives Ausführungsbeispiel der Solardachsystem 2 dargestellt. Zur Vereinfachung sind die Dachflächen 18, sowie die Montageschienen 31 hierbei nicht dargestellt. Die Grundträgerelemente 4 sind in diesem Ausführungsbeispiel mit ihren Trägerschenkeln 10 zueinander weisend aufgestellt. D. h. die Grundträgerelemente 4 treffen mit ihrem jeweiligen Firstende aufeinander, sodass die von den Montageschienen 12 getragenen Dachflächen 18 ein Satteldach bilden. In diesem Fall umfasst das Solardachsystem 2 eine Firstdichtung 40. Zur Abspannung weisen die Grundträgerelemente 4 außerdem jeweils ein viertes Fachwerkelement 42 auf, das jeweils entlang der Vertikalen 11 angeordnet und zur Abspannung des Trägerschenkels 10 mittels der Fachwerkelemente 12,14 und 16 zum Boden hin dient. Zusätzlich weist das Solardachsystem 2 auch eine Zugstrebe 44 auf, die die beiden gegenüberliegend aufgestellten und mit ihrem jeweiligen Firstende aufeinander treffenden Grundträgerelemente 4 miteinander verbindet. Jeweils zwei parallel nebeneinander aufgestellte Grundträgerelemente 4 sind auch hier mittels der Querträger 30 miteinander verbunden.

Das vierte Fachwerkelement 42 ist in diesem Ausführungsbeispiel als U-Profil ausgebildet und dient dabei auch als Montageprofil für eine traufseitige Wand oder dergleichen.

In beiden Ausführungsbeispielen gemäß Fig. 2 und 4 weisen die Grundträger 4 eine Spannweite von 5 Meter auf, sodass eine Gesamtspannweite W des Solardachsystems 2 10 Meter beträgt. Ein Abstand zwischen den parallel angeordneten Grundträgerelementen 4 (d. h. quer zum Trägerschenkel 10 gesehen) beträgt im vorliegenden Ausführungsbeispiel 2,5 Meter.

In einem optionalen Ausführungsbeispiel beträgt der Abstand zwischen den parallel angeordneten Grundträgerelementen 4 drei Meter.

In Fig. 4 ist der Fundamentadapter 24 näher dargestellt. Dieser weist eine Grundplatte 50 auf, die zur Verbindung mit einem Kopf der vorstehend beschriebenen Erdschraube dient. Außerdem weist der Fundamentadapter 24 ein Standrohr 52 auf, das normal zur Grundplatte 50 angeordnet und mit dieser verschweißt ist. Das Standrohr 52 weist konkret eine Länge von 500 Millimeter auf. Entsprechend ist auch jeder Hauptträger 6 im Bereich des Bodenendes 22 mit einem dort angeordneten, geradlinigen zweiten (endseitigen) Trägerschenkel versehen. Im bestimmungsgemäßen Montagezustand gemäß einer der Figuren 1-3 ist das jeweilige Bodenende 22 der Hauptträger 6 auf das Standrohr 52 aufgesteckt und über-deckt dieses somit.

Zur Montage, konkret zur Nivellierung (d. h. Justage der Höhe) aller Grundträgerelemente 4 zueinander umfasst das Solardachsystem 2 eine Montagemanschette (nicht näher dargestellt), die eine Bohrschablone zur Ausbildung von Befestigungsbohrungen in den Bodenenden 22 bzw. den zweiten Trägerschenkeln des jeweiligen Hauptträgers 6 bildet. Zur Montage wird dabei zunächst insbesondere mittels Distanzstücken das jeweilige Bodenende 22 in seiner Höhe gegen-über der Grundplatte 50 des Fundamentadapters 24 ausgerichtet. Anschließend wird die Montagemanschette (auch als "Schnellmontagevorrichtung" bezeichnet) mit Kontakt zur Grundplatte 50 um das Bodenende 22 des jeweiligen Hauptträgers 6 herum gelegt. Die Montagemanschette weist dabei Markierungen auf, mittels derer sie in ihrer Drehposition um das Standrohr 52 eindeutig ausgerichtet werden kann. Mittels der Montagemanschette werden dann Bohrpunkte an dem Hauptträger 6 markiert, die sich aufgrund der vorstehend beschriebenen Anordnung der Montagemanschette gegenüber dem Fundamentadapter 24 mit vorgegebenen, konkret bereits vorhandenen Bohrungen 54 in dem Standrohr 52 decken. Anschließend werden die Befestigungsbohrungen in den Bodenenden 22 ausgebildet und der jeweilige Hauptträger 6 mit dem Standrohr 52 verschraubt. Konkret kommen dabei je Hauptträger 6 zwei Schrauben zur Verbindung mit dem jeweiligen Standrohr 52 zum Einsatz.

Im Ausführungsbeispiel gemäß Fig. 1 und 2 (d. h. bei Aufstellung als Schmetterlingsdach) ist jedes Grundträgerelement 4 also mit zwei Schrauben mit dem jeweiligen Fundamentadapter 24 verbunden. Die beiden Fachwerkelemente 12 der beiden rückseitig aneinander stehenden Grundträgerelemente 4 sowie die Regenrinne 34 sind miteinander wiederum mit einer Schraube ("Zentralschraube") verbunden. Die Fachwerkelemente 14 und 16 sind mittels zwei weiterer Schrauben an den beiden Hauptträgern 6 der beiden rückseitig aneinander stehenden Grundträgerelemente 4 befestigt. Dadurch ergibt sich eine Befestigung der beiden rückseitig aneinander stehenden Grundträgerelemente 4 mittels insgesamt sieben Schrauben aneinander und an den Fundamentadaptern 24.

In Fig. 5 ist die Gummidichtung 33 dargestellt, die zwischen den einzelnen Solarpaneelen 20 quer zur Richtung der Trägerschenkel 10 verlaufend angeordnet ist. Die Gummidichtung 33 weist einen etwa U- oder V-förmigen Zentralabschnitt 56 auf, der in einem Spalt zwischen den Solarpaneelen 20 einliegt. An Schenkel 58 dieses Zentralabschnitts 56 schließen Auflageflügel 60 an, die unter-seitig an den Solarpaneelen 20 anliegen. Aufgrund der Dachneigung der jeweiligen Dachfläche 18 "rutschen" die Solarpaneele 20 in Richtung Traufe und verklemmen somit den Zentralabschnitt 56 in dem Spalt. Dabei werden die Schenkel 58 aneinander gedrückt. Oberseitig ist an den Zentralabschnitt 56 außerdem eine Dichtkontur 62 angeformt, die ebenfalls in dem Spalt einliegt. In einer optionalen Variante ist der Spalt zur Bildung einer möglichst glatten Oberfläche oberseitig mit einem Dichtungskleber verschlossen.

In Fig. 6 ist ein Ausführungsbeispiel der Trag- und Dichtungsschiene 32, das zur Halterung und Verbindung von zwei quer zur Richtung der Fachwerkelemente 12 benachbarten Solarpaneelen 20 dient, näher dargestellt. Dazu ist die Trag- und Dichtungsschiene 32 symmetrisch zu einer (im bestimmungsgemäßen Montagezustand des Solardachsystems 2 parallel zur Richtung der Fachwerkelemente 12 ausgerichteten) Symmetrieebene 64 ausgebildet.

Die Trag- und Dichtungsschiene 32 weist auf beiden Seiten der Symmetrieebene 64 ein Dichtungsprofil 66 auf. Dieses ist in die Blattebene hinein (somit in Richtung der Fachwerkelemente 12) langgestreckt ausgebildet. Das Dichtungsprofil 44 weist einen ersten Dichtungsschenkel 68 und einen zweiten Dichtungsschenkel 70 auf, die über einen Scharnierabschnitt 72 elastisch gegeneinander schwenkbar gekoppelt sind. Die beiden Dichtungsschenkel 68 und 70 sowie der Scharnierabschnitt 72 sind dabei monolithisch aus einem Elastomer, konkret einem Gummi ausgebildet. Die beiden Dichtungsschenkel 68 und 70 sind im dargestellten Montagezustand parallel zueinander angeordnet und umgreifen eine Kante 74 eines der Solarpaneele 20. In einem nicht näher dargestellten Vormontagezustand stehen die beiden Dichtungsschenkel 68 und 70 dagegen schräg auseinander.

Der erste Dichtungsschenkel 68 ist im bestimmungsgemäßen Montagezustand auf einer der Sonne zugewandten Oberseite 76 des jeweiligen Solarpaneels 20 angeordnet. Der erste Dichtungsschenkel 68 weist auf einer der Oberseite 76 des jeweiligen Solarpaneels 20 zugewandten Auflageseite eine Labyrinthdichtung 78 auf. Dadurch sind mehrere vom Außenrand in Richtung zur Kante 74 aufeinanderfolgende Mulden 80 in dem ersten Dichtungsschenkel 68 gebildet, die entlang der Längserstreckung des Dichtungsprofils 66 verlaufen und in denen gegebenenfalls vorgedrungene Flüssigkeit aufgrund der Neigung der Dachfläche 18 ablaufen kann.

An seinem Außenrand weist der erste Dichtungsschenkel 68 außerdem auch einen Dichtrand 82 auf, der unter Ausübung einer Dichtkraft auf der Oberseite 76 des jeweiligen Solarpaneels 20 aufliegt.

Die Trag- und Dichtungsschiene 32 weist außerdem auch eine Montageschiene 84 auf. Diese Montageschiene 84 umfasst ein Doppel-C-Profil 86. Die beiden C-Schenkel 88 eines jeden C-artigen Teils des Doppel-C-Profils 86 bilden dabei eine Aufnahmenut 90 für das Dichtungsprofil 66 und das darin aufgenommene Solarpaneels 20. Im dargestellten bestimmungsgemäßen Montagezustand ist somit das Dichtungsprofil 66 um das jeweilige Solarpaneel 20 geklappt und in die Aufnahmenut 90 eingeschoben. Dabei wird das Dichtungsprofil 66 von den C-Schenkeln 88 gegen das Solarpaneel 20 geklemmt. Da jedes Solarpaneel 20 quer zur Richtung der Fachwerkelemente 12 beidseitig in jeweils eine Trag- und Dichtungsschiene 32 aufgenommen ist, kann eine zusätzliche Befestigung der Solar-paneele 20 beispielsweise mittels Schrauben entfallen, da die von den Dichtungs-profilen 66 aufgebrachte Reibkraft zur Halterung der Solarpaneele 20 ausreichend hoch ist.

Da der Dichtrand 82 aus der Aufnahmenut 90 vorsteht ist dieser mit einem UVresistenten Kunststoff beschichtet oder aus einem solchen Kunststoff gebildet.

Die Montageschiene 84 umfasst außerdem eine Tragschiene 92, auf der das Doppel-C-Profil 86 montiert ist. An der Tragschiene 92 ist außerdem eine Tropf-und Führungswanne 94 montiert, die eine Ablaufrinne 96 für zwischen dem Dichtungsprofil 66 und dem jeweiligen Solarpaneel 20 durchtretende Flüssigkeit bildet. Außerdem sind in der Ablaufrinne 96 Anschlusskabel der mittels der Trag- und Dichtungsschiene 32 gehalterten Solarpaneele 20 verdeckt geführt.

Die Montageschiene 84 ist auf die Montageschienen 31 des Solardachsystems 2 aufgesetzt und an diesen befestigt.

In einem alternativen, nicht näher dargestellten Ausführungsbeispiel zur randabschlussseitigen Halterung und Abdichtung der Solarpaneele 20 weist die Trag- und Dichtungsschiene 32 nur eine der durch die Symmetrieebene 64 gebildeten "Hälften" auf. D. h., die Trag- und Dichtungsschiene 32 weist nur eine durch die C-Schenkel 88 gebildete Aufnahmenut 90 (mithin nur ein "einfaches" C-Profil) und ein Dichtungsprofil 66 auf.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet wer-den. Insbesondere können die anhand der verschiedenen Ausführungsbeispiele beschriebenen Einzelmerkmale der Erfindung und deren Ausgestaltungsvarianten auch in anderer Weise miteinander kombiniert werden.

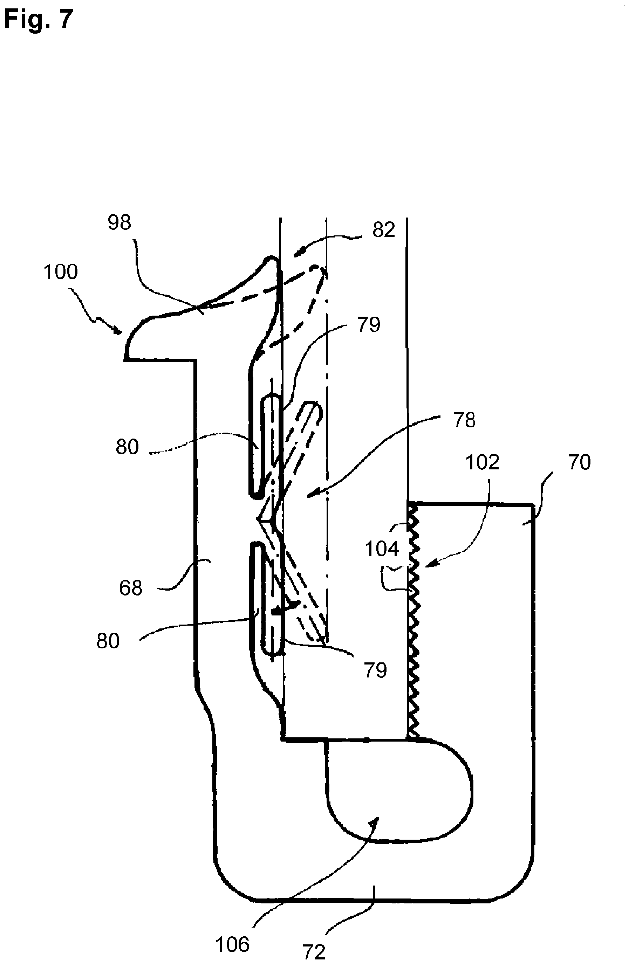

In Fig. 7 ist in einer schematischen Schnitt-Darstellung ein Elastomerdichtungsprofil näher dargestellt. Das Elastomerdichtungsprofil weist einen ersten Dichtungsschenkel 68 und einen zweiten Dichtungsschenkel 70 auf. Der erste und der zweite Dichtungsschenkel 68 und 70 sind dabei über den Scharnierabschnitt 72 elastisch gegeneinander schwenkbar gekoppelt. Die beiden Dichtungsschenkel 68 und 70 sowie der Scharnierabschnitt 72 sind dabei monolithisch aus einem Elastomer, konkret einem Gummi ausgebildet. Die beiden Dichtungsschenkel 68 und 70 sind in einem in Fig. 6 dargestellten bestimmungsgemäßen Montagezustand parallel zueinander angeordnet und umgreifen eine Kante 74 eines der Solarpaneele 20. In einem nicht näher dargestellten Vormontagezustand stehen die beiden Dichtungsschenkel 68 und 70 dagegen schräg auseinander.

Der erste Dichtungsschenkel 68 ist im bestimmungsgemäßen Montagezustand auf einer der Sonne zugewandten Oberseite 76 des jeweiligen Solarpaneels 20 angeordnet, wohingegen der zweite Dichtungsschenkel 70 im bestimmungsgemäßen Montagezustand auf der Unterseite des jeweiligen Solarpaneels 20 angeordnet ist.

Der erste Dichtungsschenkel 68 weist auf einer der Oberseite 76 des jeweiligen Solarpaneels 20 zugewandten Auflageseite die Labyrinthdichtung 78 auf. Die Labyrinthdichtung 78 ist dabei durch zwei längliche Dichtungslippen 79 gebildet, die jeweils eine in die Auflageseite eingeformte Mulden 80 überspannen. Die Dichtungslippen 79 sind dabei derart gestaltet, dass sie im Vormontagezustand V-artig von der Auflageseite abstehen (in Fig. 7 angedeutet durch eine gestrichelte Linienführung). Im bestimmungsgemäßen Montagezustand dagegen werden die Dichtungslippen 79 von der Oberseite 76 des jeweiligen Solarpaneels 20 zurückgedrückt und liegen dann fluchtend zueinander flächig auf der Oberseite 76 auf (vergleiche Fig. 6).

An seinem Außenrand weist der erste Dichtungsschenkel 68 außerdem den Dichtrand 82 auf, der im bestimmungsgemäßen Montagezustand von der Oberseite 76 des Solarpaneels 20 ebenfalls zurückgedrückt wird (vgl. Strichlinie). Die Dichtungslippen 79 und der Dichtrand 82 üben somit eine Dichtkraft auf der Oberseite 76 des Solarpaneels 20 aus.

Der zweite Dichtungsschenkel 70 weist auf seiner der Unterseite des Solarpaneels 20 zugewandten Seite die Dichtfläche 102 auf, die durch eine Vielzahl von in Längsrichtung verlaufenden Rillen 104 gebildet ist.

Da das Dichtungssystem in dem Ausführungsbeispiel gemäß Fig. 7 entlang der Neigungsrichtung des Solardachsystems verläuft, bilden die Mulden 80 sowie eine zwischen den Dichtungsschenkeln 68 und 70 und dem Scharnierbereich 72 gebildete Kammer 106 jeweils Ablaufkanäle für Wasser, das trotz Dichtung bis dorthin vordringt.

### Liste der verwendeten Bezugszeichen

- 2: Solardachsystem
- 4: Grundträgerelement
- 6: Hauptträger
- 8: Biegebereich
- 10: Trägerschenkel
- 11: Vertikale
- 12: Fachwerkelement
- 14: Fachwerkelement
- 16: Fachwerkelement
- 17: Biegungsaußenseite
- 18: Dachfläche
- 20: Solarpaneel
- 22: Bodenende
- 24: Fundamentadapter
- 26: Fundament
- 27: Niveaulinie
- 30: Querstrebe
- 31: Montageschiene
- 32: Trag- und Dichtungsschiene
- 33: Gummidichtung
- 34: Regenrinne
- 40: Firstdichtung
- 42: Fachwerkelement
- 44: Zugstrebe
- 50: Grundplatte
- 52: Standrohr
- 54: Bohrung
- 56: Zentralabschnitt
- 58: Schenkel
- 60: Anlageflügel
- 62: Dichtkontur
- 64: Symmetrieebene
- 66: Dichtungsprofil
- 68: Dichtungsschenkel
- 70: Dichtungsschenkel
- 72: Scharnierabschnitt
- 74: Kante
- 76: Oberseite
- 78: Labyrinthdichtung
- 79: Dichtungslippe
- 80: Mulde
- 82: Dichtrand
- 84: Montageschiene
- 86: Doppel-C-Profil
- 88: C-Schenkel
- 90: Aufnahmenut
- 92: Tragschiene
- 94: Tropf-und Führungswanne
- 96: Ablaufrinne
- 98: Schutzkörper
- 100: Absatz
- 102: Dichtfläche
- 104: Rille
- 106: Kammer

- W: Gesamtspannweite

## Patentansprüche

1. Solardachsystem (2), aufweisend
- eine eine vorgegebene Anzahl von Solarpaneelen (20) umfassende Dachfläche (18),
- wenigstens zwei Grundträgerelemente (4) zur Halterung der Dachfläche (18), wobei jedes Grundträgerelement (4) einen in einem Biegebereich, innerhalb einer Biegeebene gebogenen Hauptträger (6) aufweist, der aus einem geschlossenen Hohlprofil gebildet ist, wobei die Biegeebenen der Hauptträger (6) der Grundträgerelemente parallel zueinander angeordnet sind,
- wenigstens drei Fachwerkelemente (12, 14, 16, 42),
- wenigstens zwei den Grundträgerelementen (4) zugeordneten Fundamentadapter (24) zur Befestigung der Grundträgerelemente (4) an einem Fundament (26), und
- eine Trag- und Dichtungsschiene (32) zur Halterung und zur dichten Verbindung der Solarpaneele (20), deren Kanten (74) parallel zur Biegeebene nebeneinander liegen, und zur Führung von Verbindungskabeln der Solarpaneele (20),
**dadurch gekennzeichnet, dass**
die Hauptträger (6) alle jeweils einstückig und einander baugleich ausgeführt sind, wobei jeder der Hauptträger (6) im Biegebereich (8) um weniger als 90 Grad und mehr als 60 Grad knickfrei mit einem Biegeradius von wenigstens 2 Metern gebogen ist und wenigstens einen an den Biegebereich (8) anschließenden geradlinigen Trägerschenkel (10) aufweist, auf dem die Dachfläche (18) gelagert ist, und wobei mittels der Fachwerkelemente (12, 14, 16, 42) der Trägerschenkel (10) auf einer Biegungsaußenseite (17) des Biegebereichs (8) im bestimmungsgemäßen Aufstellzustand des Solardachsystems (2) abgespannt ist.

2. Solardachsystem (2) nach Anspruch 1, **gekennzeichnet dadurch, dass** es einen Querträger (30) zur Kopplung von jeweils zwei parallel aufgestellten Grundträgerelementen (4) quer zur Biegeebene des jeweiligen Hauptträgers (6) aufweist.

3. Solardachsystem (2) nach Anspruch 1 oder 2,
**gekennzeichnet dadurch, dass** eines der Fachwerkelemente (12) parallel zu dem Trägerschenkel (10) angeordnet ist und einen Träger für die Dachfläche (18) bildet, wobei dieses Fachwerkelement (12) auf dem Trägerschenkel (10) aufliegt und über den Biegebereich (8) überkragt.

4. Solardachsystem (2) nach einem der Ansprüche 1 bis 3,
**gekennzeichnet dadurch, dass** jedes Grundträgerelement (4) aus Aluminium gebildet ist und ein Gesamtgewicht von 40 bis 70 kg aufweist.

5. Solardachsystem (2) nach einem der Ansprüche 1 bis 4,
**gekennzeichnet dadurch, dass** jedes Grundträgerelement (4) eine Spannweite von weniger als 6 Metern aufweist.

6. Solardachsystem (2) nach einem der Ansprüche 1 bis 5,
**gekennzeichnet dadurch, dass** jedes Grundträgerelement (4) eine Firsthöhe von wenigstens 3 Metern und eine Traufhöhe von wenigstens 2,5 Metern aufweist.

7. Solardachsystem (2) nach einem der Ansprüche 1 bis 6,
**gekennzeichnet dadurch, dass** es wenigstens zwei Erdschrauben von etwa 2 Metern Länge zur Bildung des Fundaments (26) für die wenigstens zwei Grundträgerelemente (4) umfasst.

8. Solardachsystem (2) nach einem der Ansprüche 1 bis 7,
**gekennzeichnet dadurch, dass** der Fundamentadapter (24) eine Grundplatte (50) zur Befestigung an dem Fundament (26) und ein damit verbundenes Standrohr (52) aufweist, auf das im bestimmungsgemäßen Aufstellzustand des Solardachsystems (2) ein dem jeweiligen Trägerschenkel (10) abgewandtes Bodenende (22) des Hauptträgers (6) aufgesteckt und fixiert ist.

9. Solardachsystem nach einem der Ansprüche 1 bis 8, **gekennzeichnet dadurch, dass**
- die wenigstens zwei Grundträgerelemente (4) mit der Biegeebene der jeweiligen Hauptträger (6) parallel zueinander angeordnet sind,
- jeder der Trägerschenkel (10) mit einem Winkel von maximal 30 Grad zu einer Horizontalen angeordnet ist, und
- das Bodenende (22) des jeweiligen Hauptträgers (6) mittels eines der Fundamentadapter (24) an einem Fundament (26) befestigt ist.

10. Solardachsystem nach einem der Ansprüche 1 bis 9, **gekennzeichnet dadurch, dass** es wenigstens vier Grundträgerelemente (4) und zwei Dachflächen (18) aufweist, wobei jeweils zwei Grundträgerelemente (4) mit ihren Trägerschenkeln (10) voneinander weg weisend und mittels wenigstens zwei der jeweils wenigstens drei Fachwerkelemente (12, 14, 16) aneinander gekoppelt sind, und wobei je zwei Grundträgerelemente (4) jeweils eine der Dachflächen (18) tragen.

11. Solardachsystem nach einem der Ansprüche 1 bis 9, **gekennzeichnet dadurch, dass** es wenigstens vier Grundträgerelemente (4) und zwei Dachflächen (18) aufweist, wobei jeweils zwei Grundträgerelemente (4) mit den Trägerschenkeln (10) freiendseitig gegeneinander abgestützt sind, und wobei je zwei Grundträgerelemente (4) jeweils eine der Dachflächen (18) tragen.

12. Solardachsystem nach Anspruch 11, **gekennzeichnet dadurch, dass** jeder der Trägerschenkel (10) mittels der wenigstens drei Fachwerkelemente (12, 14, 16, 42) zum Boden hin abgespannt ist.

13. Solardachsystem nach einem der Ansprüche 1 bis 12, **gekennzeichnet dadurch, dass** es ein Dichtungssystem mit einem langgestreckten Elastomerdichtungsprofil zur Kantendichtung eines Solarpaneels (20) gegen ein Anbauteil (20) aufweist, wobei das Dichtungssystem zwei Dichtungsschenkel (68, 70) aufweist, die sich quer zur Längsrichtung des Elastomerdichtungsprofils erstrecken und über einen Scharnierabschnitt (72) miteinander einstückig verbunden sind, die in einem bestimmungsgemäßen Montagezustand im Wesentlichen parallel zueinander angeordnet sind, um eine Kante (74) des Solarpaneels (20) zu umgreifen und ober-und unterseitig an dem Solarpaneel (20) anzuliegen, und die in einem Vormontagezustand zumindest V-artig zueinander stehen,
wobei an wenigstens einem der Dichtungsschenkel (68, 70) an einer Auflageseite zum Solarpaneel (20) hin eine Labyrinthdichtung (78) mit wenigstens einer Mulde (80) ausgebildet ist,
wobei die Labyrinthdichtung (78) durch zwei im Vormontagezustand schräg von der Auflageseite des Dichtungsschenkels (68, 70) vorstehende Dichtungslippen (79) und unter diesen in die Auflageseite eingeformte Mulden (80) gebildet ist, wobei die Dichtungslippen (79) und die Mulden (80) derart bemessen sind, dass im bestimmungsgemäßen Montagezustand die Dichtungslippen (79) fluchtend zueinander und flach auf dem Solarpaneel (20) aufliegen und die korrespondierende Mulde (80) stegartig zu einem Großteil überspannen.

14. Solardachsystem nach einem der Ansprüche 1 bis 13, **gekennzeichnet dadurch, dass** die Trag- und Dichtungsschiene (32) eine in Längsrichtung verlaufende Tropf-und Führungswanne (94) aufweist, die zur Ableitung von Tropfwasser sowie zur verdeckten Führung von Anschlusskabeln des Solarpaneels (20) dient.

## Claims

1. A solar roof system (2), having
- a roof surface (18) comprising a predetermined number of solar panels (20),
- at least two base support elements (4) for retaining the roof surface (18), wherein each base support element (4) has a main support (6) which is bent in a bending region (8) within a bending plane and is formed from a closed hollow profile, and which is bend in a bending region (8) within a bending plane, wherein the bending planes of the main supports (6) of the base support elements (4) are arranged parallel to one another,
- at least three framework elements (12, 14, 16, 42)
- at least two foundation adapters (24) associated with the base support elements (4) for fastening the base support elements (4) to a foundation (26), and
- a support and sealing rail (32) for retaining and for sealingly connecting the solar panels (20), the edges (74) of which lie next to one another in parallel to the bending plane, and for guiding connection cables of the solar panels (20),
**characterized in that**
the main supports (6) are all in one piece and identical in construction, wherein each of the main supports (6) is bent in a bending region (8) by less than 90 degrees and more than 60 degrees without kinks with a bending radius of at least 2 meters, and has at least one straight support leg (10) adjoining the bending region (8) and has at least one straight support leg (10) adjoining the bending region (8), on which the roof surface (18) is borne, and wherein the support legs (10) being supported on a bend outside (17) of the bending region (8) are tensioned by means of the framework elements (12, 14, 16, 42) in the intended installation state of the solar roof system (2).

2. The solar roof system (2) according to claim 1, **characterised in that** it has a transverse support (30) for coupling of two respective base support elements (4) installed in parallel transversely to the bending plane of the respective main support (6).

3. The solar roof system (2) according to claim 1 or 2, **characterised in that** one of the framework elements (12) is arranged in parallel to the support leg (10) and forms a support for the roof surface (18), wherein this framework element (12) rests on the support leg (10) and overhangs the bending region (8).

4. The solar roof system (2) according to any of the claims 1 to 3,
**characterised in that** each base support element (4) is formed from aluminium and has a total weight of 40 to 70 kg.

5. The solar roof system (2) according to any of the claims 1 to 4,
**characterised in that** each base support element (4) has a span width of less than 6 metres.

6. The solar roof system (2) according to any of the claims 1 to 5,
**characterised in that** each base support element (4) has a ridge height of at least 3 metres and an eaves height of at least 2.5 metres.

7. The solar roof system (2) according to any of the claims 1 to 6,
**characterised in that** it comprises at least two ground screws of about 2 metres in length for forming the foundation (26) for the at least two base support elements (4).

8. The solar roof system (2) according to any of the claims 1 to 7,
**characterised in that** the foundation adapter (24) has a base plate (50) for fastening to the foundation (26) and a standpipe (52) which is connected thereto and onto which, in the intended installed state of the solar roof system (2), a ground end (22) of the main support (6) facing away from the respective support leg (10) is slipped and fixed.

9. The solar roof system according to any of the claims 1 to 8,
**characterised in that**
- the at least two base support elements (4) are arranged in parallel to one another with the bending plane of the respective main supports (6), 30
- each of the support legs (10) is arranged at an angle of at most 30 degrees to a horizontal line, and
- the ground end (22) of the respective main support (6) is fastened to a foundation (26) by means of one of the foundation adapters (24).

10. The solar roof system according to any of the claims 1 to 9,
**characterised in that** it has at least four base support elements (4) and two roof surfaces (18), wherein two base support elements (4) each are coupled to one another with their support legs (10) pointing away from one another and by means of at least two of the at least three framework elements (12, 14, 16) each, and wherein two base support elements (4) each support one of the roof surfaces (18) each.

11. The solar roof system according to any of the claims 1 to 9,
**characterised in that** it has at least four base support elements (4) and two roof surfaces (18), wherein two base support elements (4) each are supported against one another at the free end with the support legs (10), and wherein two base support elements (4) each support one of the roof surfaces (18) each.

12. The solar roof system according to claim 11,
**characterised in that** each of the support legs (10) is secured to the ground by means of at least three framework elements (12, 14, 16, 42).

13. The solar roof system according to any of the claims 1 to 12,
**characterised in that** it comprises a sealing system with an elongated elastomer sealing profile for edge sealing a solar panel (20) against an attachment part (20), wherein the sealing system has two sealing legs (68, 70) which extend transversely with respect to the longitudinal direction of the elastomer sealing profile and are integrally connected to one another via a hinge section (72), which are arranged essentially in parallel to one another in an intended mounted state in order to embrace an edge (74) of the solar panel (20) and abut against the solar panel (20) on top and bottom sides, and which are standing at least V-shaped with respect to one another in a pre-mounted state,
wherein a labyrinth seal (78) with at least one trough (80) is formed on at least one of the sealing legs (68, 70) on a bearing side towards the solar panel (20),
wherein the labyrinth seal (78) is formed by two sealing lips (79) projecting obliquely, in the pre-mounted state, from the bearing side of the sealing leg (68, 70), and by troughs (80) formed these in the bearing side,
wherein the sealing lips (79) and the troughs (80) being dimensioned in such a way that, in the intended mounted state, the sealing lips (79) lie flush with one another and flat on the solar panel (20) and span a major part of the corresponding trough (80) in a web-like manner.

14. The solar roof system according to any of the claims 1 to 13,
**characterised in that** the support and sealing rail (32) has a drip and guide tub (94) running in the longitudinal direction, which serves for draining off dripping water and for concealedly guiding connection cables of the solar panel (20).

## Revendications

1. Système de toit solaire (2), comprenant
- une surface de toit (18) présentant un nombre prédéterminé de panneaux solaires (20),
- au moins deux éléments de support de base (4) pour supporter la surface de toit (18), chaque élément de support de base (4) présentant un support principal (6) plié dans une zone de pliage, à l'intérieur d'un plan de pliage, qui est formé d'un profilé creux fermé, les plans de pliage des supports principaux (6) des éléments de support de base étant disposés parallèlement les uns aux autres,
- au moins trois éléments de charpente (12, 14, 16, 42),
- au moins deux adaptateurs de fondation (24) associés aux éléments de support de base (4) pour fixer les éléments de support de base (4) à une fondation (26), et
- un rail de support et d'étanchéité (32) pour supporter et lier de manière étanche des panneaux solaires (20), dont les bords (74) sont juxtaposés parallèlement au plan de flexion, et pour guider des câbles de liaison des panneaux solaires (20),
**caractérisé en ce que**
les supports principaux (6) sont tous réalisés d'une seule pièce et de construction identique, chacun des supports principaux (6) étant plié dans la zone de pliage (8) de moins de 90 degrés et de plus de 60 degrés sans plis avec un rayon de pliage d'au moins 2 mètres et présentant au moins une branche de support (10) rectiligne se raccordant à la zone de pliage (8), sur laquelle est montée la surface de toit (18), et dans lequel, au moyen des éléments de charpente (12, 14, 16, 42), la branche de support (10) est haubanée sur un côté extérieur de pliage (17) de la zone de pliage (8) dans l'état de montage conforme aux spécifications du système de toit solaire (2).

2. Système de toit solaire (2) selon la revendication 1, **caractérisé en ce qu'**il présente une traverse (30) pour coupler respectivement deux éléments de support de base (4) placés parallèlement, transversalement au plan de pliage du support principal (6) respectif.

3. Système de toit solaire (2) selon la revendication 1 ou 2,
**caractérisé en ce que** l'un des éléments de charpente (12) est disposé parallèlement à la branche de support (10) et forme un support pour la surface de toit (18), cet élément de charpente (12) reposant sur la branche de support (10) et dépassant de la zone de pliage (8).

4. Système de toit solaire (2) selon l'une quelconque des revendications 1 à 3, **caractérisé en ce que** chaque élément de support de base (4) est formé d'aluminium et a un poids total de 40 à 70 kg.

5. Système de toit solaire (2) selon l'une quelconque des revendications 1 à 4, **caractérisé en ce que** chaque élément de support de base (4) a une portée inférieure à 6 mètres.

6. Système de toit solaire (2) selon l'une quelconque des revendications 1 à 5, **caractérisé en ce que** chaque élément de support de base (4) présente une hauteur de faîtage d'au moins 3 mètres et une hauteur de rive d'au moins 2,5 mètres.

7. Système de toit solaire (2) selon l'une quelconque des revendications 1 à 6, **caractérisé en ce qu'**il comprend au moins deux boulons de terre d'environ 2 mètres de long pour former la fondation (26) pour les au moins deux éléments de support de base (4).

8. Système de toit solaire (2) selon l'une quelconque des revendications 1 à 7, **caractérisé en ce que** l'adaptateur de fondation (24) présente une plaque de base (50) pour la fixation sur la fondation (26) et un tube vertical (52) relié à celle-ci, sur lequel une extrémité de fond (22) de la poutre principale (6) opposée à la branche de support (10) respective est enfichée et fixée dans l'état de montage conforme aux spécifications du système de toit solaire (2).

9. Système de toit solaire selon l'une quelconque des revendications 1 à 8, **caractérisé en ce que**
- les au moins deux éléments de support de base (4) sont disposés parallèlement l'un à l'autre avec le plan de pliage des supports principaux respectifs (6),
- chacune des branches de support (10) est disposée selon un angle de 30 degrés maximum par rapport à une horizontale, et
- l'extrémité de sol (22) du support principal (6) respectif est fixée à une fondation (26) au moyen de l'un des adaptateurs de fondation (24).

10. Système de toit solaire selon l'une quelconque des revendications 1 à 9, **caractérisé en ce qu'**il présente au moins quatre éléments de support de base (4) et deux surfaces de toit (18), deux éléments de support de base (4) étant respectivement couplés l'un à l'autre avec leurs branches de support (10) orientées à l'opposé l'une de l'autre et au moyen d'au moins deux des au moins trois éléments de charpente (12, 14, 16) respectifs, et deux éléments de support de base (4) supportant chacun l'une des surfaces de toit (18).

11. Système de toit solaire selon l'une quelconque des revendications 1 à 9, **caractérisé en ce qu'**il présente au moins quatre éléments de support de base (4) et deux surfaces de toit (18), deux éléments de support de base (4) étant respectivement supportés l'un contre l'autre du côté libre par les branches de support (10), et deux éléments de support de base (4) portant chacun l'une des surfaces de toit (18).

12. Système de toit solaire selon la revendication 11, **caractérisé en ce que** chacune des branches de support (10) est haubanée vers le sol au moyen des au moins trois éléments de charpente (12, 14, 16, 42).

13. Système de toit solaire selon l'une quelconque des revendications 1 à 12, **caractérisé en ce qu'**il présente un système d'étanchéité avec un profilé d'étanchéité élastomère allongé pour l'étanchéité des bords d'un panneau solaire (20) contre une pièce rapportée (20), le système d'étanchéité présentant deux branches d'étanchéité (68, 70), qui s'étendent transversalement à la direction longitudinale du profilé d'étanchéité en élastomère et sont reliées l'une à l'autre d'un seul tenant par l'intermédiaire d'un tronçon de charnière (72), qui sont disposées sensiblement parallèlement l'une à l'autre dans un état de montage conforme aux spécifications, afin d'entourer un bord (74) du panneau solaire (20) et de s'appliquer sur les côtés supérieur et inférieur du panneau solaire (20), et qui sont disposées au moins en V l'une par rapport à l'autre dans un état de prémontage,
un joint à labyrinthe (78) avec au moins une cavité (80) étant formé sur au moins l'une des branches d'étanchéité (68, 70) sur un côté d'appui vers le panneau solaire (20), le joint à labyrinthe (78) étant formé de deux branches d'étanchéité (68, 70) qui, à l'état de prémontage, sont inclinées par rapport au côté d'appui
de la branche d'étanchéité (79) et des cavités (80) formées sous celles-ci dans le côté d'appui, les lèvres d'étanchéité (79) et les cavités (80) étant dimensionnées de telle sorte qu'à l'état de montage conforme aux prescriptions, les lèvres d'étanchéité (79) reposent à plat et en alignement les unes par rapport aux autres sur le panneau solaire (20) et recouvrent en grande partie la cavité (80) correspondante à la manière d'une barrette.

14. Système de toit solaire selon l'une quelconque des revendications 1 à 13, **caractérisé en ce que** le rail de support et d'étanchéité (32) présente un bac d'égouttage et de guidage (94) s'étendant dans le sens longitudinal, qui sert à évacuer l'eau d'égouttage ainsi qu'à guider de manière cachée les câbles de raccordement du panneau solaire (20).
